# EUROPÄISCHE PATENTSCHRIFT

(11) **EP 2 811 159 B1**
(45) Veröffentlichungstag und Bekanntmachung des Hinweises auf die Patenterteilung: **24.11.2021**
(21) Anmeldenummer: 14170718.2
(22) Anmeldetag: 02.06.2014
(51) Int. Cl.: F03D 80/80, F03D 13/25

(54) **Anlage zur Erzeugung von Windenergie auf See**
Plant for the production of wind energy at sea
Installation de production d'énergie éolienne en mer

(30) Priorität: 03.06.2013 DE 102013009437; 03.06.2013 DE 102013009436
(43) Veröffentlichungstag der Anmeldung: 10.12.2014
(73) Patentinhaber: Siemens Energy Global GmbH & Co. KG, 81739 München (DE)
(72) Erfinder: Findeisen, Jörg, 01156 Dresden (DE)

(56) Entgegenhaltungen:
- EP-A1- 2 221 474
- WO-A2-2012/072063
- WO-A2-2012/130245
- DE-A1-102006 025 832
- US-A1- 2006 062 676
- US-A1- 2011 037 264

## Beschreibung

Anlage zur Erzeugung von Windenergie auf See Die Erfindung betrifft eine Anlage zur Erzeugung von Windenergie auf See, mit mehreren seegestützten Windkraftanlagen (1) mit jeweils einem Transformator (1.8, 1.9) und Hohlstrukturelementen (2), die eine am Meeresboden (51) verankerte Gründungsstruktur und einen von dieser getragenen Turm (1.1) ausbilden, und mit einem über Kabel mit den Windkraftanlagen verbundenen, aus mehreren Komponenten (4, 4.1, 4.5, 4.7, 4.8) bestehenden Umspannwerk zur Netzanbindung.

Eine solche Anlage ist aus der US 2006/0062676 A1 bereits bekannt. Die dort beschriebene Anlage besteht aus mehreren schwimmenden Windkraftanlagen, die am Meeresboden über Ketten verankert sind. Jede Windkraftanlage verfügt über Hohlstrukturelemente, die eine Gründungsstruktur und eine von der Gründungsstruktur aufragenden Turm ausbilden. Am oberen Ende des Turms sind die Rotorblätter und die Gondel der Windenergieanlage angeordnet. An der Gründungsstruktur ist darüber hinaus ein Käfigaufbau befestigt. Im Meer wird die Gründungsstruktur weit unterhalb eines so genannten Wellenbewegungsbereiches gehalten. Bei einer Variante ist jede Windkraftanlage der Anlage direkt mit einem landseitigen Umspannwerk verbunden. Abweichend davon ist es auch möglich, dass die Windkraftanlagen über Seekabel parallel zueinander geschaltet sind, so dass anstatt einer Vielzahl von Umspannanlagen für jede Windkraftanlage lediglich ein gemeinsames Umspannwerk erforderlich ist. Dieses gemeinsame Umspannwerk ist an einer Windkraftanlage angeordnet.

Die DE 10 2006 025 832 A1 offenbart ein Bauwerk für die so genannte Offshore-Installation, wobei das Bauwerk eine in den Meeresboden hinein getriebene rohrförmige Tragesäule aufweist, an der ein Turm einer Windkraftanlage befestigt werden kann. Die besagte Tragsäule und der Turm der Windkraftanlage sind hohl ausgebildet, wobei in den Hohlräumen ein Transformator sowie eine Schaltanlage eines Umspannwerks angeordnet sind.

Ein Offshore-Windpark, bestehend aus einer Vielzahl von Windkraftanlagen welche über Kabel mit mindestens einem auf See befindlichem Umspannwerk zur Netzanbindung verbunden sind, wird üblicherweise derart gestaltet, dass dieses Umspannwerk ganz- oder teilweise am Standort einer der zum Windpark gehörigen Windkraftanlagen platziert ist und mechanisch mit der Gründung oder dem Turm dieser Windkraftanlage verbunden ist.

Dabei werden Strukturelemente des Turmes einer Windkraftanlage derart gestaltet und genutzt, dass sie die Komponenten des seeseitigen Umspannwerkes solcher Windparks aufnehmen.

Durch die beschriebene Lösung kann ganz oder teilweise auf die dem Stand der Technik entsprechenden Plattformen für die seeseitig zu errichtenden Umspannwerke dieser Windparks verzichtet werden.

Weiterhin betrifft die Erfindung eine besonders kompakte Gestaltung eines seeseitigen Umspannwerkes für Offshore-Umspannwerke.

Bekannt ist die seeseitige Errichtung von Umspannwerken auf speziellen Plattformen, welche auf See montiert werden. Weiterhin bekannt ist die Verwendung selbstschwimmender Plattformen, welche dann am Aufstellungsort am Seeboden verankert werden.

Bekannt ist die Positionierung des zu einer Windkraftanlage gehörenden Transformators in der Gondel oder im Turm einer Windkraftanlage.

Bekannt ist weiterhin die Gründung der Fundamente von Windenergieanlagen auf mehreren in den Meeresboden eingerammten Gründungsrohren, welche über ein den Turm tragendes Stützgerüst miteinander verbunden sind. Bekannte Vertreter solcher Konstruktionen sind Tripod und Tripile Fundamente. Ein solches Fundament ist in DE 10 2004 042 066 A1 beschrieben.

In der US 2011/0037264 A1 ist eine Windkraftanlage beschrieben, die eine aus Hohlstrukturelementen bestehende Gründungsstruktur und einen Turm aufweist. Am Ende des Turmes ist eine Gondel angeordnet, in der ein Generator, ein Getriebe und Steuer- und Regelsysteme angeordnet sind.

In herkömmlichen Umspannwerken führen die erforderlichen elektrischen Luftabstände zu einem erheblichen Raumbedarf.

Werden solche Umspannwerke im Offshore-Bereich eingesetzt, macht sich der Volumenbedarf durch die notwendigen großen Plattformen, Einhausungen für Komponenten, Fundamente, und Gründungsstrukturen als besonderer Kostentreiber bemerkbar. Einen besonders hoher Volumen- und Flächenbedarf verursachen die für HGÜ erforderlichen Konverterstationen.

Im Stand der Technik werden auch die seeseitigen Konverterstationen für HGÜ-Anlagen auf speziellen Offshore-Plattformen untergebracht. Hier kommt es zu einer besonderen Verschärfung der Raumsituation.

In allen diesen Fällen, ist die Erstellung der Umspannplattform mit erheblichen Kosten verbunden.

Ein weiterer Nachteil ist der erhebliche Aufwand beim Austausch großer Komponenten, zum Beispiel der Transformatoren, im Reparaturfall.

Ziel der Erfindung ist es die genannten Nachteile zu vermeiden .

Die Aufgabe wird erfindungsgemäß durch die Merkmale des Anspruchs 1 gelöst.

Demnach weist eine Anlage zur Erzeugung von Windenergie auf See, zum Beispiel ein Offshore-Windpark, mehrere seegestützten Windkraftanlagen mit Hohlstrukturelementen, die eine am Meeresboden verankerte Gründungsstruktur und einen von dieser getragenen Turm ausbilden und ein aus mehreren Komponenten bestehendes Umspannwerk auf. Erfindungsgemäß ist vorgesehen, dass die Komponenten in den Hohlstrukturelementen mehrerer der Windkraftanlagen angeordnet sind.

Der Offshore-Windpark, umfassend eine Vielzahl von Windkraftanlagen welche über Kabel mit mindestens einem auf See befindlichem und aus mehreren Komponenten bestehenden Umspannwerk zur Netzanbindung verbunden sind, wird derart gestaltet, dass das seeseitige Umspannwerk zur Netzanbindung am Standort mehrerer der zum Windpark gehörigen Windkraftanlaqen platziert ist, wobei die Komponenten des Umspannwerkes in den die Gründungsstruktur und den Turm bildenden Hohlstrukturelementen mehrerer der Windkraftanlagen angeordnet sind und auf die die Gründungsstruktur und den Turm bildende Hohlstrukturelemente verteilt sind.

Das zur Netzanbindung erforderliche Umspannwerk wird in die Gründungsstruktur und den Turm mehrerer der vorhandenen Windkraftanlagen integriert. Die nach dem Stand der Technik üblichen separaten Plattformen zur Aufnahme dieser Umspannwerke entfallen.

Die Türme von Windkraftanlagen weisen meist Fundamente auf, welche aus Stahlrohren gebildet sind. Dabei kommen in Abhängigkeit von den jeweiligen Einsatzbedingungen verschiedene Konstruktionen zum Einsatz, beispielsweise Monopile-Fundamente, die nur einen einzelnen Pfahl aufweisen, Jacket-Fundamente, die eine Stahlfachwerkkonstruktion aufweisen, Tripod-Fundamente, die eine Dreibeinkonstruktion aus Stahlrohren aufweisen, welche unter Wasser einen Hauptpfahl stützt, Tripile-Fundamente, die drei am Meeresboden verankerte Pfähle aus Stahlrohr aufweisen, auf welche über Wasser eine Dreibeinkonstruktion aufgesetzt wird, oder Mehrpfahlsysteme.

Erfindungsgemäß werden die genannten Gründungsstrukturen zur Unterbringung und / oder als Gehäuse für die Komponenten des Umspannwerkes genutzt.

Ebenfalls erfindungsgemäß werden der Turm und die genannten Gründungsstrukturen zur Unterbringung oder als Gehäuse für die Komponenten des Umspannwerkes genutzt.

Die Gewichtskraft der Komponenten des Umspannwerkes (insbesondere der Leistungstransformatoren) in der Gründungsstruktur führt zu einer Erhöhung der Masse derselben und trägt damit zur Erhöhung der Stabilität des Offshore-Bauwerkes bei. Bei der in mehreren Ausführungsformen bevorzugten Platzierung der schweren Komponenten des Umspannwerkes im unteren Bereich des Offshore-Bauwerkes wird der Schwerpunkt der Gründungs- und Turmstruktur der Anlage in Richtung Seeboden verlagert und damit die für hohe Windgeschwindigkeiten erforderliche Verankerung des Fundamentes der Windkraftanlage im Seeboden vereinfacht.

Vorteilhaft sind die Komponenten zu Funktionsbaugruppen zusammengefasst und die Funktionsbaugruppen jeweils in den Hohlstrukturelementen einer Windkraftanlage angeordnet.

Vorzugsweise sind die Komponenten jeweils einer Phase des Umspannwerks zu Phasenbaugruppen zusammengefasst, und die Phasenbaugruppen jeweils in den Hohlstrukturelementen einer Windkraftanlage angeordnet.

Erfindungsgemäß sind die Komponenten des Umspannwerkes auf die Gründungsstruktur und den Turm mehrerer Windkraftanlagen verteilt. Dabei ist eine Aufteilung, sowohl nach Funktionsbaugruppen als auch die Aufteilung in Einphaseneinheiten möglich. Insbesondere für HGÜ-Anlagen mit ihrem großen Raumbedarf bietet sich eine Auf teilung nach Funktionsbaugruppen auf die Gründungsstruktur mehrerer Windkraftanlagen an. Zweckmäßigerweise können insbesondere die großvolumigen und schweren Komponenten, zum Beispiel die Leistungstransformatoren als Einphasensysteme ausgeführt werden.

In einer vorteilhaften Ausgestaltung der Erfindung werden Funktionseinheiten des Umspannwerkes einphasig ausgeführt und die Komponenten jeweils einer Phase in verschiedenen Gründungspfeilern oder Querverstrebungen der Gründungsstrukturuntergebracht. Vorteilhafterweise werden die Komponenten einer Phase teilweise oder ganz zu einem Modul verbunden. Damit ergibt sich eine vereinfachte Fertigung und Reservehaltung für die Funktionseinheiten. Durch die Nutzung von 4 Hohlstrukturelementen wird es möglich, elektrische Komponenten für eine Phase als Ersatz für den Ausfall einer Komponente bereitzustellen. Insbesondere die Bereitstellung eines Reservetransformators in der vorgenannten Weise erspart aufwändige seeseitige Ausbau- und Transportprozesse im Schadensfall.

In gleicher Weise lässt sich der Parallelbetrieb von Funktionseinheiten des Offshore Umspannwerkes vorteilhaft realisieren.

Ferner wird bevorzugt, dass die Hohlstrukturelemente in Ihrer Anzahl, in Ihren Abmessungen und ihrer Tragfähigkeit an die aufzunehmenden Komponenten angepasst sind.

Dazu werden erfindungsgemäß die Abmessungen der genannten Hohlstrukturen derart dimensioniert, dass eine Platzierung der Komponenten des Umspannwerkes ermöglicht wird. Die Komponenten werden entsprechend ihrer Masse, ihren Abmessungen und den jeweils erforderlichen Betriebsbedingungen in den Hohlstrukturen platziert.

Eine weitere Ausgestaltung der Erfindung sieht mehrere miteinander verbundene Hohlstrukturelemente der Umspannplattform vor, die zusammen Sektionen des Umspannwerkesund / oder weitere Funktionsbereiche bilden.

In einer vorteilhaften Ausgestaltung werden jeweils akustisch sensible Funktionsbereiche(Beispielsweise Wohnbereiche) von den geräuschintensiven Bereichen (zum Beispiel den Transformatoren) getrennt in verschiedenen Hohlstrukturelementen angeordnet.

In einer vorteilhaften Ausgestaltung werden jene Baugruppen des Umspannwerkes, welche eine erhöhte brandschutztechnische Sicherheit erfordern, derart in den Hohlstrukturelementen der Gründung platziert, dass sich ein großer Abstand zu den mit einem höheren Brandrisikobehafteten Baugruppen (beispielsweise den Transformatoren) ergibt.

Weiterhin wird bevorzugt, dass das den Turm bildende Hohlstrukturelement an seiner Basis einen erweiterten Durchmesser zur Aufnahme von Komponenten aufweist.

In einer vorteilhaften Ausgestaltung ist vorgesehen, dass die Windkraftanlagen Hebewerkzeuge aufweisen, die dazu ausgebildet sind, Komponenten von einem Seefahrzeug durch in den Hohlstrukturelementen angeordneten wiederverschließbaren Öffnungen in die Hohlstrukturelemente zu verladen.

Vorteilhafterweise werden die zur Platzierung der Funktionsbaugruppen des Offshore-Umspannwerkes dienenden Hohlstrukturelemente mit verschließbaren Öffnungen zum Austausch von Komponenten versehen.

Vorzugsweise sind die der Aufnahme von Funktionselementen des Umspannwerkes dienenden Räume der Hohlstrukturelemente gegenüber der Umgebung des Offshore-Umspannwerkes hermetisch abgeschlossen und mit einem leichten Überdruck beaufschlagt.

Weiterhin wird bevorzugt dass die Hohlstrukturelemente dicht abschließbare Hohlräume ausbilden, die mit einem Isolierfluid zur elektrischen Isolation der Komponenten füllbar sind.

In dieser Ausführungsform der Erfindung ist vorgesehen, die Komponenten vollständig oder zu wesentlichen Teilen in einem mit einem Isolierfluid befüllten Gehäuse zu platzieren. Durch den Verzicht auf Schnittstellen an der Luft, entfallen die internen großen Mindestabstände in Luft, sowie die Gleitstrecken an Luft und es können die wesentlich kleineren erforderlichen Abstände des gewählten Fluides genutzt werden.

Die Einbettung der Komponenten in ein Isolierfluid führt durch die dann vorhandene Kapselung aller Komponenten, weiterhin zu einer Verringerung des Umwelteinflusses und damit zu einer Verminderung der Korrosions- und Alterungseffekte.

In einer vorteilhaften Ausgestaltung der Erfindung erhalten die Hauptkomponenten dabei eigene mit dem Isoliermedium befüllte Kammern. Dadurch wird die Gestaltung separater Kühlkreisläufe möglich. Ein weiterer Vorteil ist, dass bei Reparatur einer Komponente, die anderen Komponenten und Funktionsteile mit dem Isoliermedium befüllt (imprägniert) bleiben und damit beispielweise keine zusätzlichen Maßnahmen vor der Inbetriebnahme notwendig sind (zum Beispiel Trocknungs- oder Prüfprozesse für Wicklungen).

Des Weiteren sieht eine vorteilhafte Ausgestaltung der Erfindung vor, dass innerhalb der Hohlräume elektrische Barrieren oder magnetische Abschirmungen angeordnet sind.

In dieser Ausführungsform der Erfindung wird innerhalb der Hohlstrukturelemente ein aus zylindrischer Feststoffisolation bestehendes elektrisches Barrierensystem aufgebaut.

In einer vorteilhaften Ausgestaltung der Erfindung wird das Isolationssystem mit einem Barrierensystem versehen, welches im Zugangsbereich über verschiebbare Zwischenbarrieren verfügt.

Ferner wird bevorzugt dass in den Hohlstrukturelementen ein Gerüst angeordnet ist, in dem mehrere Komponenten turmartig übereinander anordenbar sind.

In einer besonderen Ausführungsform der Erfindung wird die turmförmig angeordnete Ventilstruktur in einem vertikal beweglichen Gerüst befestigt. Dieses Gerüst wird derartig aufgebaut, dass es mittels entsprechender Hubvorrichtungen schrittweise angehoben oder gesenkt werden kann.

Weiterhin wird bevorzugt dass eine Komponente ein Drehstrom-Transformator ist, der mehrere Wicklungen aufweist, deren Wicklungsachsen koaxial zueinander und in der gleichen Richtung wie die Achse des Hohlstrukturelementes ausgerichtet sind.

Bei dieser Ausgestaltung wird der Transformator als Drehstrom-Manteltyp ausgeführt und derart in den rohrförmigen Strukturen des Turmes oder der Gründungsstruktur eingebracht, dass die Wicklungsachse in gleicher Richtung wie die Rohrstrukturachse ausgerichtet ist. Durch diese Bauweise ist auch die Unterbringung von Drehstromtransformatoren größter Leistung in den beschriebenen Hohlstrukturen möglich.

In einer weiteren Ausführungsform der Erfindung werden die Verbindungselemente zwischen den zur Aufnahme der Komponenten des Umspannwerkes dienenden Hohlstrukturelementen und / oder die Verbindungselemente zwischen den Tragrohren und dem Turm der Windkraftanlage mit einer speziellen Brand- und Feuerschutzwand ausgerüstet.

Die Wärme abgebenden Komponenten des Offshore-Umspannwerkes werden je nach abzuführender Verlustleistung und Umgebungsbedingungen mittels Seewasser, oder Umgebungsluft gekühlt.

Vorteilhafterweise können die großen Außenflächen der Hohlstrukturen der Gründung des Offshore-Bauwerkes in die Kühlung der Komponenten des Umspannwerkes einbezogen werden.

Weiterhin schließt die beschriebene Anordnung auch die so genannten selbst schwimmenden Offshore-Umspannwerke ein, dann können die ausfahrbaren Tragsäulen und / oder ihr Gehäuse zur Bildung der erfindungsgemäßen Struktur genutzt werden.

Zur Abführung der Verlustleistung der Ventilanordnung werden nach dem Stand der Technik flüssige Kühlmittel (vorzugsweise entionisiertes Wasser) verwendet. Dieses Kühlmittel wird erfindungsgemäß über elektrisch isolierte Rohrsysteme derart zu den Ventilanordnungen geführt, dass es zu keinem Durchbruch der zylindrischen Feststoffisolation und / oder der Barrierenanordnung kommt.

Der Innenraum einer HGÜ-Stromrichterhalle mit dem Wechselrichter ist im Regelfall wegen der elektromagnetischen Verträglichkeit komplett metallisch vom Außenbereich geschirmt. Entsprechend einer vorteilhaften Ausführungsform der Erfindung wird auch die HGÜ-Stromrichterhalle in die Hohlstrukturelemente der Gründungsstruktur integriert.

In einer vorteilhaften Ausgestaltung wird die erforderliche Schirmung ganz oder teilweise durch die metallische Hohlstruktur der Gründung eines Offshore-Bauwerkes oder des Turmes einer Windkraftanlage gebildet.

In einer weiteren Ausführungsform wird eine seitliche Verstrebung der Gründungsstruktur als Revisions- und / oder Transportzugang zu der vertikalen Baukastenstruktur genutzt.

Der Übergang von der vertikalen die Anlagenkonstruktion beherbergenden Hohlstruktur zu dem als Zugang dienenden rohrförmigen Querträger wird mit einer dicht verschließbaren Öffnung versehen.

Zu Revisionen wird nun im entsprechenden Bereich das lsolierfluid abgelassen und die Anordnung kann durch die Öffnung zum Querträger betreten werden. Um Thyristoren oder IGBT's auszutauschen, kann nun die Zwischenbarriere verschoben werden und die Ventileinheit wird zugänglich.

Die selbige Vorgehensweise ist auch für weitere Komponenten des Umspannwerkes umsetzbar. Die Ventilabschnitte können mit Steuerkondensatoren und / oder Überspannungsableitern verschaltet sein, welche ebenfalls im isolierten Segment der beschriebenen Anordnung angebracht werden.

Um eine wirtschaftliche Fertigung und einfache Reparatur der HGÜ-Ventilanordnung zu ermöglichen, besteht jedes HGÜ-Ventil aus einer von der jeweiligen Spannung abhängigen Anzahl identischer Thyristor- oder IGBT -Modulen. Diese können zur Begrenzung der Stromanstiegsgeschwindigkeit mit einer so genannten Ventildrossel verschalten werden. Die in der Erfindung beschriebene modulare Anordnung bezieht je nach Anwendungsfall diese Drossel mit ein.

Weitere alternative oder bevorzugte Ausführungsformen werden im Folgenden beschrieben:
In einer alternativen und nicht beanspruchten Ausführungsform besteht ein Offshore-Windpark aus einer Vielzahl von Windkraftanlagen welche über Kabel mit mindestens einem auf See befindlichem Umspannwerk zur Netzanbindung verbunden sind und ist dadurch gekennzeichnet, dass dieses Umspannwerk ganz- oder teilweise am Standort einer der zum Windpark gehörigen Windkraftanlagen platziert ist und mechanisch mit der Gründung oder dem Turm dieser Windkraftanlage verbunden ist.

Dabei ist bevorzugt, dass die Funktionsbaugruppen dieses Offshore-Umspannwerkes nach Funktionen oder als Einphasensysteme aufgeteilt werden und physisch mehreren Windkraftanlagen des Offshore Windparks zugeordnet werden.

Eine weitere bevorzugte Ausführung ist dadurch gekennzeichnet, dass die Hohlstrukturelemente der Gründung , oder des Turmes einer Windkraftanlage , von ihren Abmessungen und ihrer Ausführung derart gestaltet sind, dass sie die Komponenten des Umspannwerkes teilweise oder vollständig aufnehmen und dass die Abmessungen der genannten Hohlstrukturen derart dimensioniert sind, dass eine Platzierung der Komponenten des Umspannwerkes entsprechend ihrer jeweiligen Masse, ihren Abmessungen und den jeweils erforderlichen Betriebsbedingungen ermöglicht wird.

Vorteilhaft ist auch, dass die zur Platzierung der Funktionsbaugruppen des Offshore-Umspannwerkes dienenden Hohlstrukturelemente mit verschließbaren Öffnungen zum Austausch von Komponenten versehen sind und diese derart angeordnet sind, dass Komponenten des Offshore-Umspannwerkes mittels eines Hebezeuges auf ein Seefahrzeug verladen werden können.

Ebenfalls bevorzugt wird, wenn der zur Platzierung von Komponenten eines Umspannwerkes genutzte Turm einer Windparkanlage derart in die Gründungsstruktur der Windkraftanlage eingefügt ist, dass der Boden des Turmes über einen Abstand zur Wasseroberfläche verfügt, welche den Austausch von Komponenten mittels einer Barke ermöglicht.

Vorteilhaft ist auch, wenn die Mittelachse der Gründungsstruktur zur Mittelachse des Turmes versetzt angeordnet ist.

Besonders vorteilhaft ist, dass an einem zentralen Pfeiler oder dem Turm einer Windkraftanlage ein Hebezeug derart angebracht ist, dass dessen Dreh- und Schwenkbereich die Hohlstrukturelemente überstreicht, welche zur Aufnahme von Komponenten des Umspannwerkes vorgesehen sind.

Ferner wird bevorzugt, dass ein Teil der Hochspannung führenden elektrischen Baugruppen in innerhalb von mit einem Isolierfluid befüllten Gefäßen angeordnet ist und das diese Gefäße innerhalb der Hohlstrukturelemente platziert werden oder die Hohlstrukturelemente selbst zumindest teilweise als mit Isolierfluid gefüllte Gefäße zur Aufnahme der Baugruppen ausgeführt werden.

Vorzugsweise ist ein die Komponente umschließendes Gefäß mit einer inneren koaxialen Wandung versehen, welche einen ständig oder bei Bedarf fluidfreien Raum bildet durch den innerhalb der Komponente ein Begehungsweg bildbar ist.

In einer vorteilhaften Ausgestaltung ist vorgesehen, dass Teile der Hohlstruktur der Gründung selbst als Kapselung für einen Teil der Hochspannung führenden elektrischen Baugruppen ausgebildet sind.

Des Weiteren sieht eine vorteilhafte Ausgestaltung der Erfindung vor, dass elektrische Barrieren oder magnetische Abschirmungen innerhalb der elektrische Komponenten des Umspannwerkes umgebenden Hohlstrukturelemente und / oder fluidbefüllten Behältnissen angeordnet sind.

Vorzugsweise ist der die Komponenten beinhaltende fluidbefüllte Raum mit einer Zugangsöffnung versehen und die dort befindliche Barrieren- oder Abschirmungsstruktur ist mit beweglichen Barrieren- und oder Abschirmanordnungen versehen, welche in einer Führung positioniert werden und im Betriebsfall der Anlage eine Überlappung zu den feststehenden Barrieren- oder Abschirmanordnungen aufweisen.

Vorzugsweise wird die elektrische Abschirmung der elektrischen Komponenten des Umspannwerkes ganz oder teilweise von den metallischen Hohlstrukturen der Gründung selbst dargestellt.

Eine weitere alternative und nicht beanspruchte Ausführung betrifft ein Umspannwerk für den Einsatz auf See, bei welchem die Komponenten des Umspannwerkes in einem Offshore-Bauwerk angeordnet sind. Dieses ist dadurch gekennzeichnet, dass diese Komponenten zumindest teilweise innerhalb der durch die Gründungsstruktur oder den Turm eines Offshore-Bauwerkes dargestellte Hohlstrukturelemente eingefügt werden, sowie das diese Hohlstrukturelemente in ihrer Struktur-, Größe-, Gestaltung-, und Anordnung derart ausgelegt sind, dass eine Platzierung der Komponenten des Umspannwerkes entsprechend ihrer jeweiligen Masse, ihren Abmessungen und den jeweils erforderlichen Betriebsbedingungenermöglicht wird.

Vorteilhaft trägt die Gründungsstruktur einen zentral angeordneten Turm für eine Windkraftanlage (1) und die Gründungsstruktur schließt mehrere radial zum Turm beabstandete Tragstrukturen ein.

Vorzugsweise sind die zur Platzierung der Funktionsbaugruppen des Offshore-Umspannwerkes dienenden Hohlstrukturelemente mit verschließbaren Öffnungen zum Austausch von Komponenten versehen, die derart angeordnet sind, dass Komponenten des Offshore-Umspannwerkes mittels eines Hebezeuges auf ein Seefahrzeug verladen werden können.

Besonders vorteilhaft sind die horizontalen oder geneigten Verbindungselemente zwischen den vertikalen Hohlstrukturelementen (2) des Offshore-Bauwerkes mit einem Weg ausgestattet, welcher den Transport von Personal und Material zwischen den Funktionseinheiten ermöglicht, sowie das innerhalb dieser Verbindungsstrukturen elektrischen Verbindungsleitungen zwischen den in verschiedenen Hohlstrukturelementen angeordneten Komponenten des Umspannwerkes verlegt sind.

Es wird auch bevorzugt, dass die Verbindungen der Hohlstrukturelemente der Gründungsstruktur mit Brandschutzwällen ausgestattet sind und diese zumindest teilweise mit Brandschutztüren versehen sind.

Ebenfalls vorteilhaft ist an einem zentralen Pfeiler oder dem Turm einer Windkraftanlage ein drehbares Hebezeug derart angebracht ist, dass dessen Dreh- und Schwenkbereich die Hohlstrukturelemente überstreicht, welche zur Aufnahme von Komponenten des Umspannwerkes vorgesehen sind.

Vorzugsweise sind Komponenten jeweils einer Phase in verschiedenen Gründungspfeilern oder Querverstrebungen der Gründungsstruktur angeordnet.

Es wird auch bevorzugt, dass weitere Hohlstrukturelemente der Gründungsstruktur zur Platzierung von einphasigen Reservemodulen Anwendung finden.

In einer vorteilhaften Ausgestaltung ist zumindest ein Transformator derart in einem Hohlstrukturelement der Gründungsstruktur oder des Turmes angeordnet, dass die Wicklungsachse in gleicher Richtung wie die Rohrstrukturachse ausgerichtet ist und der Transformator als Manteltyp ausgeführt ist.

In einer weiteren vorteilhaften Ausgestaltung sind mehrere Komponenten turmartig mittels eines Gerüstes übereinander innerhalb der von der Gründungsstruktur oder dem Turm gebildeten Hohlstrukturelemente angeordnet.

Besonders vorteilhaft ist das Gerüst, auf dem die Komponenten angeordnet sind, derart gestaltet, dass es eine mittels Führungseinrichtungen innerhalb der Hohlstrukturelemente verschiebbare Anordnung angibt.

Des Weiteren sieht eine vorteilhafte Ausgestaltung der Erfindung vor dass die Hochspannung führenden elektrischen Baugruppen zumindest teilweise in gekapselten Gefäßen untergebracht sind und diese mit einem Isolierfluid befüllt werden, wobei die Kapselung entweder durch ein innerhalb der Hohlstruktur angeordnetes Gefäß, oder zumindest teilweise durch die Hohlstruktur der Gründung- oder des Turmes des Offshore-Bauwerkes gebildet wird.

Ebenfalls vorteilhaft ist, dass das die elektrischen Komponenten des Umspannwerkes umschließende Gehäuse und / oder die der Aufnahme von Komponenten des Umspannwerkes dienende Hohlstruktur der Gründungoder des Turmes des Offshore-Bauwerkes als elektrische oder magnetische Abschirmung der elektrischen Komponenten des Umspannwerkes ausgebildet ist.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden.

Einander entsprechende Teile sind in allen Figuren mit den gleichen Bezugszeichen versehen.

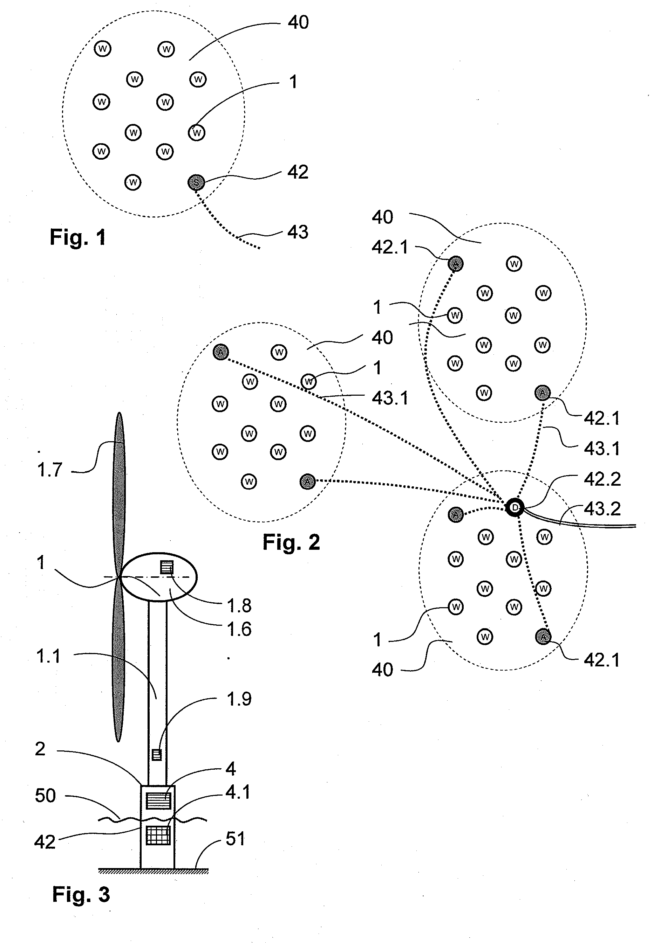

Fig. 1 zeigt einen Offshore Windpark (40), welcher mit einer bestimmten Anzahl von Windkraftanlagen (1) ausgestattet ist. Das zur Netzanbindung erforderliche Umspannwerk (42) ist in die Gründungsstruktur einer der vorhandenen Windkraftanlagen (1) integriert. Die nach dem Stand der Technik üblichen separaten Plattformen zur Aufnahme dieser Umspannwerke entfallen. Fig. 2 zeigt eine Anordnung mehrerer Windparks (40). Die Windkraftanlagen versorgen im Ausführungsbeispiel jeweils 2 AC-Umspannwerke (42.1). Von diesen wird über AC-Hochspannungskabel (43.1) die seeseitige Konverterstation (42.2) einer HGÜ-Übertragungsstrecke (43.2) versorgt. Erfindungsgemäß können die Komponenten des Umspannwerkes (41.1/41.2) auf die Gründungs- und Turmstruktur mehrerer Windkraftanlagen (1) verteilt werden. Dabei ist eine Aufteilung, sowohl nach Funktionsbaugruppen als auch die Aufteilung in Einphaseneinheiten möglich. Insbesondere für HGÜ-Anlagen mit ihrem großen Raumbedarf bietet sich eine Aufteilung nach Funktionsbaugruppen auf mehrere Windkraftanlagen (1) an.

Fig. 3 zeigt eine Windkraftanlage. Entsprechen dem Stand der Technik befindet sich der zur Windkraftanlage gehörende Transformator (1.8/1.9) in der Gondel (1.6) oder dem Turm (1.1) der entsprechenden Windkraftanlage. Gemäß Figur 3 wird die Gründungs- (2) und / oder Turmstruktur dieser Windkraftanlage derart gestaltet, dass sie die Komponenten (4) für das zur Netzanbindung eines oder mehrerer Offshore-Windparks (40) notwendige Umspannwerk (42) aufnehmen kann. Die nach dem Stand der Technik üblichen Plattformen zur Aufnahme dieser Umspannwerke entfallen.

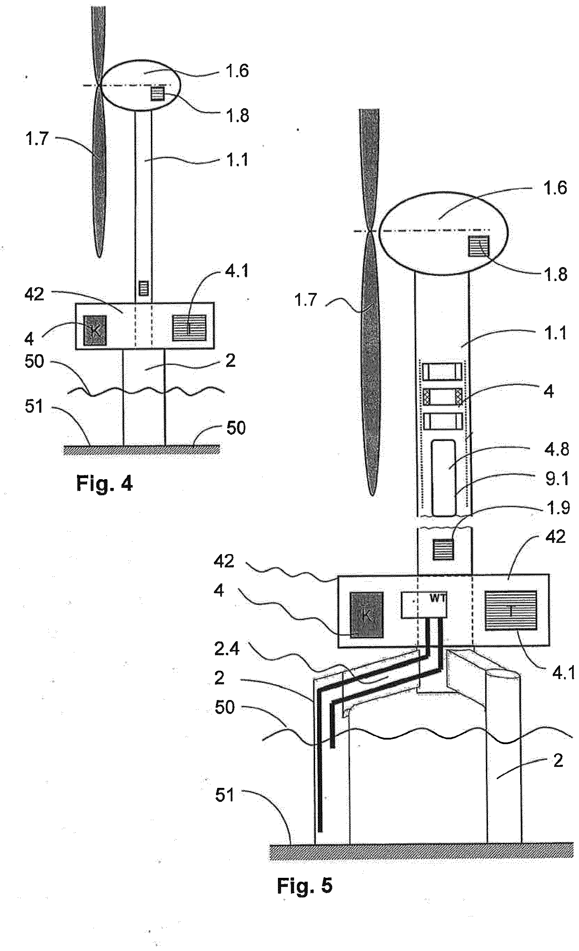

Fig. 4 zeigt ein Ausführungsbeispiel bei dem das seeseitige Umspannwerk (42) des Windparks in einem Gehäuse untergebracht ist, welches direkt auf der Monopile Gründung (2) des Turmes (1.1) der Windkraftanlage (1) aufgesetzt ist. Die Monopile Gründung ist derart ausgeführt, dass sie das Umspannwerk tragen kann. Die Anordnung der Komponenten (4) erfolgt im Gehäuse des Umspannwerkes zweckmäßigerweise derart, dass keine oder nur eine geringe Verlagerung des Schwerpunktes des Gesamtbauwerkes erfolgt.

Beim in Fig. 5 gezeigten Ausführungsbeispiel ist das Umspannwerk (42) an der den Turm (1.1) der Windkraftanlage tragenden dreibeinigen Gründungsstruktur angebracht. Diese ist im Ausführungsbeispiel als so genanntes "Tripile-Fundament" ausgeführt. Dieses Fundament ist durch seine Stützweite auch für größere Wassertiefen geeignet. Im Ausführungsbeispiel sind Komponenten (4) des Umspannwerkes in der Hohlstruktur des Turmes untergebracht. Zweckmäßigerweise erfolgt im oberen Teil des Turmes die Unterbringung von Komponenten des Umspannwerkes, welche eine geringe Masse aufweisen und einen geringen Wartungsbedarf haben. Im Ausführungsbeispiel ist das Umspannwerk mit einer in einem Stahlpfeiler der Gründungsstruktur befindlichen Kühlanlage verbunden.

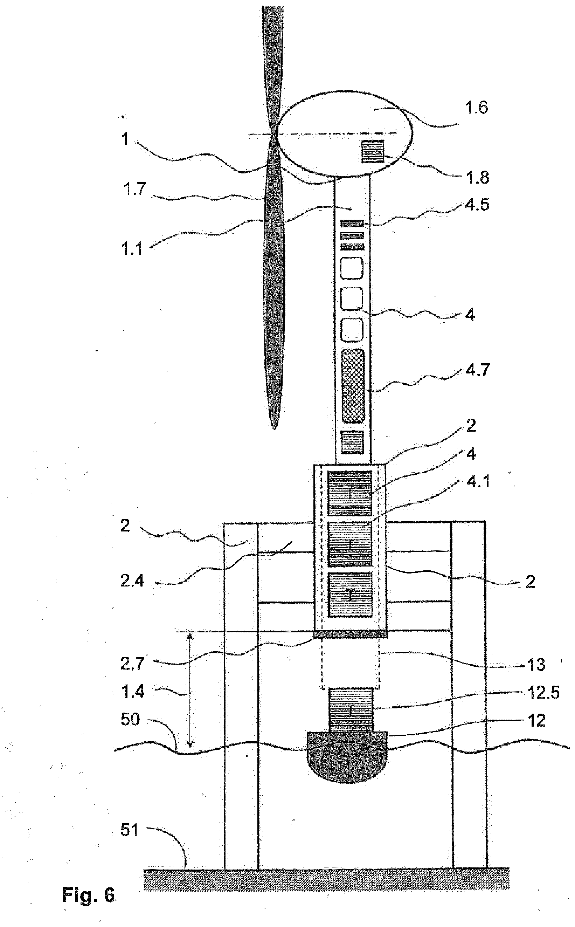

Fig. 6 zeigt ein Ausführungsbeispiel bei dem der untere Bereich des Turmes (2) derart gestaltet wurde, dass er die großen Komponenten des Umspannwerkes aufnehmen kann. Im Beispiel sind die Leistungstransformatoren (4.1) im unteren Bereich des Turmes untergebracht. Weitere Komponenten (4), beispielsweise eisenlose Drosseln (4.5) des Umspannwerkes sind ebenfalls im Turm angeordnet. Um die Abmessungen des Turmes dafür nutzen zu können, sind diese Bauteile ganz oder teilweise von einem Isolierfluid umgeben. Die zur Platzierung der Funktionsbaugruppen des Offshore-Umspannwerkes dienenden Hohlstrukturelemente (2) sind mit verschließbaren Öffnungen (2.7) zum Austausch von Komponenten versehen und derart angeordnet, dass Komponenten des Offshore-Umspannwerkes im Reparaturfalle (4) mittels eines Hebezeuges (13) auf ein Seefahrzeug (12) verladen werden können. Zweckmäßigerweise können insbesondere die großvolumigen und schweren Komponenten als Einphasensysteme ausgeführt werden.

In einer vorteilhaften Ausgestaltung dieser Lösung wird jeweils eine zusätzliche Einheit dieser Komponenten als Reserveeinheit vorinstalliert.

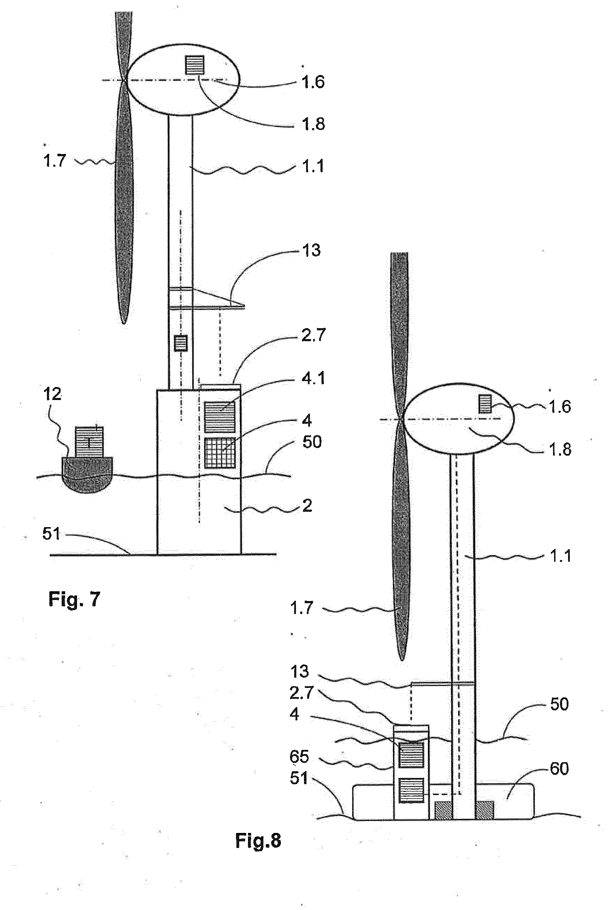

Fig. 7 zeigt ein Ausführungsbeispiel bei dem die Hohlstruktur der Gründung (2) derart gestaltet wurde, dass sie in der Lage ist die großvolumigen Komponenten (4.1) des Umspannwerkes aufzunehmen. Auf der Gründungsstruktur ist eine verschließbare Montageöffnung (2.7) zum Austausch von Komponenten vorgesehen. Weiterhin ist am Turm (1.1) eine Aufnahmevorrichtung für ein bewegliches Hebezeug (13) angebracht. In der dargestellten Ausführungsform sind die Mittelachsen der Gründungsstruktur (2) und des Turmes (1.1) der Windkraftanlage zueinander verschoben, so dass es möglich wird auch große Komponenten (4.1) im Reparaturfalle auszutauschen und auf ein Seefahrzeug (12) zu verladen.

In Fig. 8 ist eine Ausführung der beschriebenen Lösung auf einem Schwerkraftfundament (60) dargestellt. Dieses wird im Ausführungsbeispiel durch einen Betonblock (60) gebildet, welcher auf dem Seeboden (51) platziert wird. In diesem befindet sich die Verankerung für den Turm (1.1) der Windkraftanlage. In die Fundamentstruktur (60) werden Hohlstrukturen (65) zur Aufnahme der Komponenten (4) des Offshore-Umspannwerkes eingebunden. Diese Hohlstrukturen (65) werden mit einer verschließbaren Montageöffnung (2.7) versehen und derart angeordnet dass sie mittels eines am Turm (1.1) montierbaren beweglichen Hebezeuges (13) erreichbar sind.

Solche Schwerkraftfundamente sind auch in Wannenform ausführbar und können dann Schwimmfähigkeit erreichen. In diesem Falle ist die beschriebene Lösung analog umsetzbar.

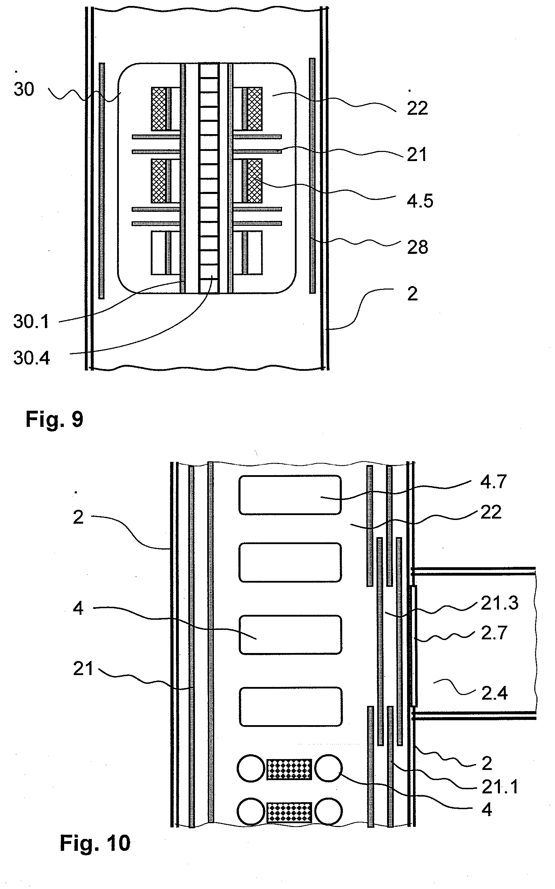

Fig. 9 zeigt die Platzierung von elektrischen Komponenten (4.5) eines Umspannwerkes in einem Gefäß (30), welches mit einem Fluid (22) befüllt ist. Dieses wird innerhalb der Hohlstruktur (2) angeordnet. Diese Anordnung ist im Beispiel mit einer magnetischen Abschirmung (28) versehen, welche vorteilhafterweise an der Hohlstruktur der Gründung (2) befestigt werden kann. Ebenso ist eine Schirmung durch eine entsprechende Ausführung des Gefäßes (30) aus einem Leiterwerkstoff möglich. Die Fluidbefüllung ermöglicht die Realisierung der erforderlichen elektrischen Abstände innerhalb der Gründungsstruktur.

Im Ausführungsbeispiel ist eine eisenlose Drossel (4.5) innerhalb des fluidgefüllten Gefäßes angeordnet. Im Ausführungsbeispiel wird das Gefäß (30) durch einen Isolationswerkstoff gebildet und innerhalb der Gründungsstruktur (2) der Windkraftanlage angeordnet. In einer besonderen Ausgestaltung der Erfindung wird das zylindrische Gefäß der eisenlosen Drossel (4.5) mit einer koaxialen angeordneten Wandung (30.4) versehen, welche einen Innenraum bildet.

Dieser Innenraum ist sowohl als ständiger Luftraum ausbildbar, oder es sind Vorrichtungen vorgesehen welche ein Ablassen des Fluides im Bedarfsfall ermöglichen. Somit ist innerhalb der Drossel ein Wartungsweg bildbar, welcher natürlich nur außerhalb des Betriebes der Anlage nutzbar ist.

Durch die beschriebene Anordnung bleibt die Wicklung der Drossel trotz Bildung eines Begehungsweges immer vom Fluid imprägniert.

Diese Anordnung ermöglicht beispielsweise die Stapelung von Drosseln großer Durchmesser in sonst kaum nutzbaren Abschnitten der Gründungsstruktur.

Fig. 10 zeigt ein Ausführungsbeispiel, bei dem Komponenten (4) vollständig in einem fluidbefüllten Raum angeordnet sind. Durch den Verzicht auf Schnittstellen an der Luft, entfallen die internen großen Mindestabstände in Luft, sowie die Gleitstrecken an Luft.

Das elektrische Isolationssystem des Ausführungsbeispiels ist mit den Barrieren (21) einer Feststoff-, oder Mischisolation ausgestattet. In der dargestellten Ausführungsform wird eine seitliche Verstrebung der Gründungsstruktur (2.4) als Revisions- und / oder Transportzugang zu der vertikalen Baukastenstruktur genutzt. Der Übergang von der vertikalen die Anlagenkonstruktion beherbergenden Hohlstruktur zu dem als Zugang dienenden rohrförmigen Querträger wird mit einer dicht verschließbaren Öffnung (2.7) versehen.

In einer vorteilhaften Ausgestaltung der Erfindung wird das Isolationssystem mit einem Barrierensystem versehen, welches im Zugangsbereich über verschiebbare Zwischenbarrieren (21.3) verfügt. Zu Revisionen wird nun im entsprechenden Bereich das Isolierfluid (22) abgelassen und die Anordnung kann durch die Öffnung (2.7) zum Querträger (2.4) betreten werden.

Um Komponenten zu warten, oder Thyristoren oder IGBT's einer Ventileinheit auszutauschen, kann nun die Zwischenbarriere (21.3) verschoben werden und Komponente (Beispielsweise eine Drossel oder Ventileinheit) wird zugänglich.

Diese Anordnung ermöglicht die Anordnung einer Vielzahl von elektrischen Komponenten auf kleinem Raum und damit die Integration in die vorhandenen Hohlstrukturelemente eines Offshore-Bauwerkes, bei Gewährleistung der Zugänglichkeit im Reparaturfall.

## Patentansprüche

1. Anlage zur Erzeugung von Windenergie auf See, mit
- mehreren seegestützten Windkraftanlagen (1) mit jeweils einem Transformator (1.8, 1.9) und Hohlstrukturelementen (2), die eine am Meeresboden (51) verankerte Gründungsstruktur und einen von dieser getragenen Turm (1.1) ausbilden, und mit
- einem über Kabel mit den Windkraftanlagen verbundenen, aus mehreren Komponenten (4, 4.1, 4.5, 4.7, 4.8) bestehenden Umspannwerk zur Netzanbindung,
**dadurch gekennzeichnet, dass** die Komponenten (4, 4.1, 4.5, 4.7, 4.8) in den die Gründungsstruktur und den Turm (1.1) bildenden Hohlstrukturelementen (2) mehrerer der Windkraftanlagen (1) angeordnet sind, wobei die Komponenten (4, 4.1, 4.5, 4.7, 4.8) des Umspannwerkes auf die die Gründungsstruktur und den Turm (1.1) bildende Hohlstrukturelemente (2) mehrerer Windkraftanlagen verteilt sind.

2. Anlage zur Erzeugung von Windenergie auf See nach Anspruch 1, **dadurch gekennzeichnet, dass** die Komponenten (4, 4.1, 4.5, 4.7, 4.8) zu Funktionsbaugruppen zusammengefasst werden und die Funktionsbaugruppen jeweils in den Hohlstrukturelementen (2) einer Windkraftanlage (1) angeordnet sind.

3. Anlage zur Erzeugung von Windenergie auf See nach Anspruch 1, **dadurch gekennzeichnet, dass** die Komponenten (4, 4.1, 4.5, 4.7, 4.8) jeweils einer Phase des Umspannwerks zu Phasenbaugruppen zusammengefasst werden, und die Phasenbaugruppen jeweils in den Hohlstrukturelementen (2) einer Windkraftanlage (1) angeordnet sind.

4. Anlage zur Erzeugung von Windenergie auf See nach einem der Ansprüche 1 bis 3, **dadurch gekennzeichnet, dass** die Hohlstrukturelemente (2) in Ihrer Anzahl, in Ihren Abmessungen und ihrer Tragfähigkeit an die aufzunehmenden Komponenten (4, 4.1, 4.5, 4.7, 4.8) angepasst sind.

5. Anlage zur Erzeugung von Windenergie auf See nach Anspruch 4, **dadurch gekennzeichnet,**
**dass** das den Turm (1.1) bildende Hohlstrukturelement (2) an seiner Basis einen erweiterten Durchmesser zur Aufnahme von Komponenten aufweist.

6. Anlage zur Erzeugung von Windenergie auf See nach einem der Ansprüche 1 bis 5, **dadurch gekennzeichnet,**
**dass** die Windkraftanlagen (1) Hebewerkzeuge (13) aufweisen, die dazu ausgebildet sind, Komponenten (4, 4.1, 4.5, 4.7, 4.8) von einem Seefahrzeug durch in den Hohlstrukturelementen(2) angeordneten wiederverschließbaren Öffnungen (2.7) in die Hohlstrukturelemente (2) zu verladen.

7. Anlage zur Erzeugung von Windenergie auf See nach einem der Ansprüche 1 bis 6, **dadurch gekennzeichnet,**
**dass** die Hohlstrukturelemente (2) dicht abschließbare Hohlräume ausbilden, die mit einem Isolierfluid (22) zur elektrischen Isolation der Komponenten (4, 4.1, 4.5, 4.7, 4.8) füllbar sind.

8. Anlage zur Erzeugung von Windenergie auf See nach Anspruch 7, **dadurch gekennzeichnet,**
**dass** innerhalb der Hohlräume elektrische Barrieren (21, 21.1, 21.3) oder magnetische Abschirmungen (28) angeordnet sind.

9. Anlage zur Erzeugung von Windenergie auf See nach einem der Ansprüche 1 bis 8, **dadurch gekennzeichnet,**
**dass** in den Hohlstrukturelementen (2) ein Gerüst (9.1) angeordnet ist, in dem mehrere Komponenten (4, 4.1, 4.5, 4.7, 4.8) turmartig übereinander anordenbar sind.

10. Anlage zur Erzeugung von Windenergie auf See nach einem der Ansprüche 1 bis 9,
**dadurch gekennzeichnet,**
**dass** eine Komponente (4, 4.1, 4.5, 4.7, 4.8) ein Drehstrom-Transformator (4.1) ist, der mehrere Wicklungen aufweist, deren Wicklungsachsen koaxial zueinander und in der gleichen Richtung wie die Achse des Hohlstrukturelementes (2) ausgerichtet sind.

## Claims

1. Plant for the production of wind energy at sea, comprising
- a number of sea-based wind turbines (1), each with a transformer (1.8, 1.9) and hollow structural elements (2), which form a foundation structure anchored to the seabed (51) and a tower (1.1) carried by it,
and comprising
- a substation for connection to the grid, consisting of a number of components (4, 4.1, 4.5, 4.7, 4.8) and connected to the wind turbines by means of cables,
**characterized in that**
the components (4, 4.1, 4.5, 4.7, 4.8) are arranged in the hollow structural elements (2), forming the foundation structure and the tower (1.1), of a number of the wind turbines (1), the components (4, 4.1, 4.5, 4.7, 4.8) of the substation being distributed among the hollow structural elements (2), forming the foundation structure and the tower (1.1), of a number of wind turbines.

2. Plant for the production of wind energy at sea according to Claim 1, **characterized**
**in that** the components (4, 4.1, 4.5, 4.7, 4.8) are grouped together in functional assemblies and the functional assemblies are respectively arranged in the hollow structural elements (2) of a wind turbine (1).

3. Plant for the production of wind energy at sea according to Claim 1, **characterized**
**in that** the components (4, 4.1, 4.5, 4.7, 4.8) of each phase of the substation are grouped together in phase assemblies, and the phase assemblies are respectively arranged in the hollow structural elements (2) of a wind turbine (1).

4. Plant for the production of wind energy at sea according to one of Claims 1 to 3, **characterized**
**in that** the hollow structural elements (2) are adapted in their number, in their dimensions and their load-bearing capacity to the components (4, 4.1, 4.5, 4.7, 4.8) to be received.

5. Plant for the production of wind energy at sea according to Claim 4, **characterized**
**in that** the hollow structural element (2) forming the tower (1.1) has at its base an extended diameter for receiving components.

6. Plant for the production of wind energy at sea according to one of Claims 1 to 5, **characterized**
**in that** the wind turbines (1) have lifting gear (13) designed for loading components (4, 4.1, 4.5, 4.7, 4.8) from an oceangoing vessel into the hollow structural elements (2) through reclosable openings (2.7) arranged in the hollow structural elements (2).

7. Plant for the production of wind energy at sea according to one of Claims 1 to 6, **characterized**
**in that** the hollow structural elements (2) form hollow spaces that can be closed off in a sealed manner and can be filled with an insulating fluid (22) for the electrical insulation of the components (4, 4.1, 4.5, 4.7, 4.8).

8. Plant for the production of wind energy at sea according to Claim 7, **characterized**
**in that** electrical barriers (21, 21.1, 21.3) or magnetic shieldings (28) are arranged within the hollow spaces.

9. Plant for the production of wind energy at sea according to one of Claims 1 to 8, **characterized**
**in that** a framework (9.1) in which a number of components (4, 4.1, 4.5, 4.7, 4.8) can be arranged one above the other in the manner of a tower is arranged in the hollow structural elements (2) .

10. Plant for the production of wind energy at sea according to one of Claims 1 to 9,
**characterized**
**in that** one component (4, 4.1, 4.5, 4.7, 4.8) is a three-phase transformer (4.1), which has a number of windings, the winding axes of which are coaxial to one another and aligned in the same direction as the axis of the hollow structural element (2) .

## Revendications

1. Installation de production d'énergie éolienne en mer, comprenant
- plusieurs installations (1) éoliennes basées en mer, ayant chacune un transformateur (1.8, 1.9) et des éléments (2) creux de structure, qui constituent une structure de fondation ancrée au fond (51) de la mer et une tour (1.1) portée par celle-ci,
et comprenant
- un poste de transformation pour la connexion au réseau consistant en plusieurs composants (4, 4.1, 4.5, 4.7, 4.8) reliés aux installations éoliennes par câble,
**caractérisée en ce que**
les composants (4, 4.1, 4.5, 4.7, 4.8) sont disposés dans les éléments (2) creux de structure, formant la structure de fondation et la tour (1.1), de plusieurs des installations (1) éoliennes, les composants (4, 4.1, 4.5, 4.7, 4.8) du poste de transformation étant répartis sur les éléments (2), formant la structure de fondation et la tour (1.1), de plusieurs installations éoliennes.

2. Installation de production d'énergie éolienne en mer suivant la revendication 1, **caractérisée**
**en ce que** les composants (4, 4.1, 4.5, 4.7, 4.8) sont rassemblés en modules fonctionnels et les modules fonctionnels sont disposés chacun dans les éléments (2) creux de structure d'une installation (1) éolienne.

3. Installation de production d'énergie éolienne en mer suivant la revendication 1, **caractérisée**
**en ce que** les composants (4, 4.1, 4.5, 4.7, 4.8) respectivement d'une phase du poste de transformation sont rassemblés en modules de phase et les modules de phase sont disposés respectivement dans les éléments (2) creux de structure d'une installation (1) éolienne.

4. Installation de production d'énergie éolienne en mer suivant l'une des revendications 1 à 3, **caractérisée**
**en ce que** les éléments (2) creux de structure sont adaptés dans leur nombre, leurs dimensions et leur aptitude à porter aux composants (4, 4.1, 4.5, 4.7, 4.8) à recevoir.

5. Installation de production d'énergie éolienne en mer suivant la revendication 4, **caractérisée**
**en ce que** l'élément (2) creux de structure formant la tour (1.1) a à sa base un diamètre agrandi pour la réception de composants.

6. Installation de production d'énergie éolienne en mer suivant l'une des revendications 1 à 5, **caractérisée**
**en ce que** les installations (1) éoliennes ont des outils (13) de levage, qui sont constitués pour charger des composants (4, 4.1, 4.5, 4.7, 4.8) par un véhicule maritime dans les éléments (2) creux de structure par des ouvertures (2.7) pouvant être refermées prévues dans les éléments (2) creux de structure.

7. Installation de production d'énergie éolienne en mer suivant l'une des revendications 1 à 6, **caractérisée**
**en ce que** les éléments (2) creux de structure constituent des espaces creux pouvant être fermés d'une manière étanche, qui peuvent être remplis d'un fluide (22) isolant pour l'isolation électrique des composants (4, 4.1, 4.5, 4.7, 4.8).

8. Installation de production d'énergie éolienne en mer suivant la revendication 7, **caractérisée**
**en ce que** des barrières (21, 21.1, 21.3) ou des blindages (28) magnétiques peuvent être disposés à l'intérieur des espaces creux.

9. Installation de production d'énergie éolienne en mer suivant l'une des revendications 1 à 8, **caractérisée**
**en ce qu'**une ossature (9.1), dans laquelle plusieurs composants (4, 4.1, 4.5, 4.7, 4.8) peuvent être superposés à la manière d'une tour, est disposée dans les éléments (2) creux de structure.

10. Installation de production d'énergie éolienne en mer suivant l'une des revendications 1 à 9, **caractérisée**
**en ce qu'**un composant (4, 4.1, 4.5, 4.7, 4.8) est un transformateur (4.1) triphasé, qui a plusieurs enroulements, dont les axes d'enroulement sont coaxiaux entre eux et sont dirigés dans la même direction que l'axe de l'élément (2) creux de structure.
